# EUROPÄISCHE PATENTANMELDUNG

(11) **EP 3 352 331 A1**
(43) Veröffentlichungstag der Anmeldung: **25.07.2018**
(21) Anmeldenummer: 17152229.5
(22) Anmeldetag: 19.01.2017
(51) Int. Cl.: H02K 1/02, H02K 1/27

(54) **ROTORBLECH FÜR EINEN PERMANENTERREGTEN ELEKTROMOTOR UND ROTOR**

(71) Anmelder: Siemens Aktiengesellschaft, 80333 München (DE)
(72) Erfinder: Balling, Florian, 97616 Bad Neustadt (DE); Kuhn, Martin, 97708 Roth a d Saale (DE); Susic, Marko, 97616 Bad Neustadt (DE); Tropoja, Ardian, 97702 Münnerstadt (DE); Wolf, Nico, 98596 Trusetal (DE)

(57) **Zusammenfassung**

Ein Rotorblech (1) für einen permanenterregten Elektromotor, umfasst mehrere in umfänglichen Anordnungen in das Rotorblech (1) eingebrachte, längliche erste und zweite Ausnehmungen (2, 3) zur Aufnahme von Permanentmagneten (4). Die ersten Ausnehmungen (2) sind in einer radial innenliegenden ersten Anordnung und die zweiten Ausnehmungen (3) in einer radial außenliegenden zweiten Anordnung derart orientiert, dass jede erste und zweite Ausnehmung (2, 3) schräg bezüglich einer radialen Richtung verläuft. Zur Ausbildung eines Rotorpols sind jeweils zwei in Umfangsrichtung benachbart und zueinander V-förmig angeordnete erste und zweite Ausnehmungen (2, 3) vorgesehen, die spiegelsymmetrisch bezüglich einer dazwischenliegenden und in radialer Richtung verlaufenden Spiegelachse (S) angeordnet sind.

## Beschreibung

Die Erfindung betrifft ein Rotorblech für einen permanenterregten Elektromotor, das mehrere in umfänglichen Anordnungen in das Rotorblech eingebrachte Ausnehmungen umfasst.

Rotierende elektrische Maschinen können beispielsweise als Innen- oder Außenläufermotoren ausgebildet sein. Bei Elektromotoren ist ein Rotor typischerweise drehfest auf einer Rotorwelle befestigt, welche bezüglich einen den Rotor umgebenden Stator drehbeweglich gelagert ist. Derartige Rotoren bestehen typischerweise aus einer Mehrzahl von Rotorblechen, die in axialer Richtung, d. h. entlang der Rotorachse, nebeneinander gestapelt sind. Hierzu ist es bekannt, mehrere derartige in einem sog. Blechpaket angeordnete Rotorbleche auf der Rotorwelle beispielsweise aufzuschrumpfen, d. h. das Blechpaket wird im erwärmten Zustand auf die Rotorwelle aufgeschoben und anschließend abgekühlt. Zusätzlich kann die drehfeste Verbindung zwischen Blechpaket und Welle über eine formschlüssige Verbindung erfolgen.

Elektromotoren sind in verschiedenen Bauarten bekannt. Hierzu sind beispielsweise fremd- und permanenterregte Innen- oder Außenläufermotoren bekannt, bei denen der Rotor entsprechend Erregerwicklungen aufweist oder mit Permanentmagneten versehen ist. Permanenterregte Synchronmotoren (PSM) werden heutzutage verstärkt im Bereich der elektrisch angetriebenen Kraftfahrzeuge eingesetzt, da diese Elektromoren eine hohen Wirkungsgrad bei kompakten Bauformen erreichen.

Die bereitgestellte Leistung bzw. das erzeugbare Drehmoment hängt bei permanenterregten Elektromotoren maßgeblich von der magnetischen Flussdichte ab, die von in Ausnehmungen des Rotorblechs eingebetteten Permanentmagneten hervorgerufen wird. Hierzu ist insbesondere die räumliche Verteilung der Permanentmagnete im Rotor ausschlaggebend.

Die Erfindung stellt sich zur Aufgabe, die Leistungsdichte von permanenterregten Elektromotoren zu verbessern

Gemäß der Erfindung wird diese Aufgabe gelöst durch ein Rotorblech mit den Merkmalen des Patentanspruchs 1 sowie einem Rotor mit den Merkmalen des Patentanspruchs 7.

Vorteilhafte Weiterbildungen der Erfindung sind Gegenstand der Unteransprüche.

Ein Rotorblech für einen permanenterregten Elektromotor weist mehrere in umfänglichen Anordnungen in das Rotorblech eingebrachte, längliche erste und zweite Ausnehmungen zur Aufnahme von Permanentmagneten auf. Die ersten Ausnehmungen sind in einer radial innenliegenden ersten Anordnung und die zweiten Ausnehmungen in einer radial außenliegenden zweiten Anordnung derart orientiert, dass jede erste und zweite Ausnehmung schräg bezüglich einer radialen Richtung verläuft. Zur Ausbildung eines Rotorpols sind jeweils zwei in Umfangsrichtung benachbart und zueinander V-förmig angeordnete erste Ausnehmungen und zweite Ausnehmungen vorgesehen, die spiegelsymmetrisch bezüglich einer dazwischenliegenden und in radialer Richtung verlaufenden Spiegelachse angeordnet sind.

Ziel ist es, mehr Magnetmaterial in den Rotor einzubringen. Hierzu wird vorgeschlagen, längliche Ausnehmungen zur Aufnahme des Magnetmaterials im Rotorblech bzw. Rotorblech vorzusehen, die sich hinsichtlich ihrer radialen Position, also hinsichtlich ihres radialen Abstandes vom Schwerpunkt des Rotorblechs unterscheiden. Durch diese geometrische Aufteilung der Magnetstruktur wird eine bessere mechanische Ausnutzung des Rotorblechs erreicht. Das derart strukturierte Rotorblech eignet sich in besonderem Maße für hohe Drehzahlen. Zudem hat es sich herausgestellt, dass das in den zweiten Ausnehmungen der radial außenliegenden zweiten Anordnung eingebrachte Magnetmaterial eine geringere Entmagnetisierungsfestigkeit aufweisen kann, als das Magnetmaterial, welches in den ersten Ausnehmungen der radial innenliegenden ersten Anordnung eingebracht ist. Dadurch lassen sich die Herstellungskosten minimieren und gleichzeitig die elektromagnetischen Eigenschaften der Magnetstruktur verbessern.

Die ersten und zweiten Ausnehmungen haben eine längliche Gestalt, d. h. sie weisen eine Längsausdehnung auf, die länger ist als eine senkrecht dazu verlaufende Querausdehnung. In bevorzugten Ausführungsbeispielen ist die Längsausdehnung zumindest doppelt so lang wie die Querausdehnung der ersten oder zweiten Ausnehmung.

Die ersten und zweiten Ausnehmungen haben im Wesentlichen eine geradlinige, schlitzförmige Gestalt und verlaufen schräg bezüglich der radialen Richtung, d. h. sie nehmen eine Winkelstellung ein, die zwischen einer radialen Ausrichtung und einer tangentialer Ausrichtung liegt. Der Winkel, in dem die Längsausdehnung der jeweiligen ersten oder zweiten Ausnehmung bezüglich der radialen Richtung orientiert ist, beträgt somit mehr als 0° und weniger als 90°. Vorzugsweise beträgt der Winkel zwischen Längsausdehnung und radialer Richtung zwischen 15° und 75°, besonders bevorzugt zwischen 20° und 80°.

Das Rotorblech ist vorzugsweise ein Elektroblech. Ein aus mehreren solchen Elektroblechen bestehendes, axial geblechtes Blechpaket wirkt der Ausbildung von Wirbelströmen entgegen.

Die beiden den Rotorpol bildendenden ersten und zweiten Ausnehmungen sind spiegelsymmetrisch bezüglich einer gemeinsamen Spiegelachse angeordnet. Mit anderen Worten ist der Rotorpol von zwei V-förmig angeordneten ersten Ausnehmungen und zwei V-förmig angeordneten zweiten Ausnehmungen gebildet, die zueinander in radialer Richtung versetzt sind.

Die beiden ersten und zweiten Ausnehmungen des Rotorpols sind vorzugsweise zueinander in Winkeln angeordnet, wobei der Winkel zwischen den ersten Ausnehmungen größer ist als der Winkel zwischen den zweiten Ausnehmungen. Die radial weiter außenliegenden zweiten Ausnehmungen verlaufen somit bezüglich der tangentialen Richtung in einem kleineren Winkel, als die radial weiter innenliegenden ersten Ausnehmungen.

In einem bevorzugten Ausführungsbeispiel sind radial innenliegende Enden der ersten und zweiten Ausnehmungen des Rotorpols zueinander in Umfangsrichtung in einem kleineren Abstand angeordnet, als radial außenliegende Enden der ersten und zweiten Ausnehmungen. Die V-förmigen Anordnungen weisen somit mit ihren Spitzen radial nach innen, also in Richtung des Schwerpunkts des Rotorblechs.

Vorzugsweise hat das Rotorblech eine Struktur, die die Ausbildung von mehrpoligen Rotoren ermöglicht. Das Rotorblech ist in einem bevorzugten Ausführungsbeispiel zur Ausbildung eines achtpoligen Rotors ausgeführt. Der Rotorpol ist in diesem Fall in ein 45° - Segment des Rotorblechs eingebracht.

Die Längsausdehnung der ersten Ausnehmungen ist vorzugsweise größer als die Längsausdehnung der zweiten Ausnehmungen.

Die erste Anordnung und zweite Anordnung sind vorzugsweise in zumindest abschnittsweise überlappenden kreisringförmigen Radialbereichen des Rotorblechs eingebracht. Beispielsweise sind V-förmig angeordnete erste und zweite Ausnehmungen derart zueinander versetzt angeordnet, dass die ersten Ausnehmungen sich zumindest teilweise über einen kreisförmigen Radialbereich erstrecken, der auch von den zweiten Ausnehmungen beansprucht wird. So wird sichergestellt, dass die Radialausdehnung des Rotor zur Bereitstellung einer hohen magnetischen Flussdichte optimal genutzt wird.

Vorzugsweise sind mehrere Aussparungen zur Aufnahme von Wuchtgewichten in regelmäßigen Abständen umfänglich um das Rotorblech verteilt eingebracht, d. h. sie sind bezüglich des Schwerpunkts des Rotorblechs an zueinander gleichmäßig versetzten Winkelpositionen angeordnet. Durch Einbringen von Wuchtgewichten kann eine etwaige Unwucht eines aus mehreren Rotorblechen bestehenden Blechpakets ausgeglichen werden.

Die Erfindung betrifft ferner einen Rotor für einen permanenterregten Elektromotor, welcher mehrere entlang einer Rotorachse angeordnete Rotorbleche aufweist, die die vorstehend beschriebene Struktur aufweisen und zueinander in axialer Richtung in einem Blechpaket fixiert sind.

Die Rotorbleche sind im Blechpaket derart mit ihren Flachseiten zueinander nebeneinander angeordnet, dass die die jeweiligen Rotorpole bildenden Permanentmagnete in Magnettaschen eingebettet werden können, die von ersten und zweiten Ausnehmungen aneinander angrenzender Rotorbleche gebildet sind.

Ein bevorzugtes Ausführungsbeispiel betrifft einen Rotor mit Staffelung, d. h. das Blechpaket besteht aus mehreren Einzelpaketen, in denen jeweils mehrere Rotorbleche derart angeordnet sind, dass die ersten und zweiten Ausnehmungen übereinander liegen und so durchgängige Magnettaschen bilden. Zumindest zwei benachbarte Einzelpakete sind zueinander um einen Winkelversatz um die Rotorachse versetzt angeordnet.

Der Betrag des Winkelversatzes ist vorzugsweise in Abhängigkeit der Anzahl von Statornuten eines Stators des Elektromotors gewählt. Besonders bevorzugt entspricht der Winkelversatz einem Wert von 360° geteilt durch das Produkt der Anzahl der Statornuten des Stators und der Anzahl der Einzelpakete.

Besonders bevorzugt umfasst der Rotor mehrere Rotorpole, die jeweils von Permanentmagneten gebildet sind, die in den Magnettaschen eingebettet sind. Hierzu sind die Permanentmagnete in jeweils zwei in Umfangsrichtung benachbart und zueinander V-förmig angeordneten ersten und zweiten Ausnehmungen eines jeden Rotorpols eingebettet. Die in den zweiten Ausnehmungen eingebetteten Permanentmagnete bestehen vorzugsweise aus einem Magnetmaterial, welches eine geringere Entmagnetisierungsfestigkeit aufweist, als das Magnetmaterial der in den ersten Ausnehmungen eingebetteten Permanentmagnete. Eine derartige Ausbildung ermöglicht eine Reduzierung der Herstellungskosten durch die Verwendung von kostengünstigem Magnetmaterial bei gleichzeitiger Bereitstellung einer hohen Leistungsdichte.

Der aus den vorstehend beschriebenen Rotorblechen gebildete Rotor eignet sich in besonderem Maße für einen Elektromotor im Antriebsstrang eines elektrisch angetriebenen Kraftfahrzeugs, insbesondere eines Personenkraftwagens oder eines Nutzfahrzeugs. Mit elektrisch angetriebenen Kraftfahrzeugen sind solche gemeint, die zumindest einen zum Vortrieb des Kraftfahrzeugs ausgebildeten elektrischen Antrieb aufweisen. Diese Definition schließt insbesondere sogenannte Hybridfahrzeuge ein, bei denen typischerweise zusätzlich zum elektrischen Antrieb ein Verbrennungsmotor vorgesehen ist.

Für eine weitere Beschreibung der Erfindung wird auf das in den Zeichnungsfiguren gezeigte Ausführungsbeispiel verwiesen. Es zeigen in einer schematischen Darstellung:
- FIG 1: ein achtpoliges Rotorblech gemäß einem möglichen Ausführungsbeispiel der Erfindung in einer schematischen Draufsicht;
- FIG 2: ein 45°-Segment des Rotorblechs der Figur 1 in eine Detaildarstellung;
- FIG 3: ein aus den Rotorblechen gebildeter Rotor in einer Schematischen Seitenansicht.

Einander entsprechende Teile sind in allen Zeichnungsfiguren mit den gleichen Bezugszeichen versehen.

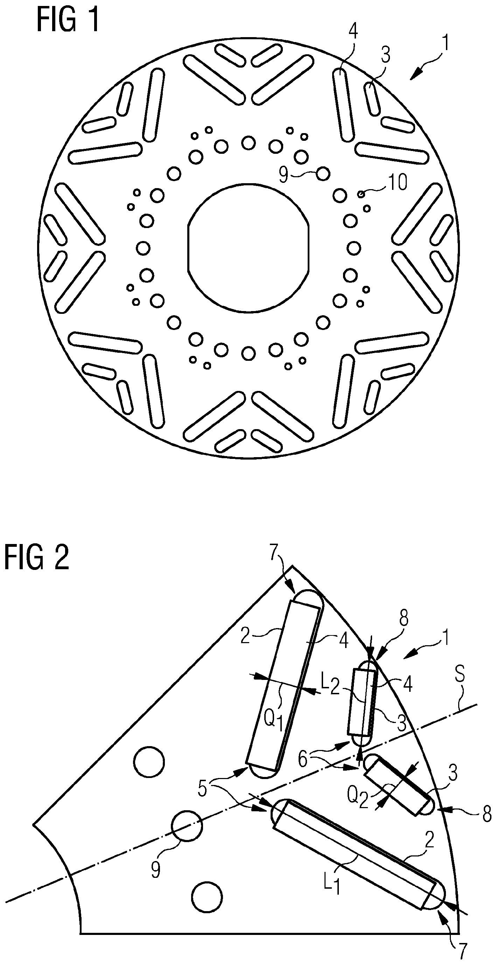

Figur 1 zeigt ein achtpoliges Rotorblech 1 gemäß einem möglichen Ausführungsbeispiels der Erfindung in einer Draufsicht. Figur 2 zeigt ein 45°-Segment des Rotorblechs 1, welches einen Rotorpol bildet, im Detail.

Das Rotorblech 1 umfasst erste und zweite Ausnehmungen 2, 3, die umfänglich um das Rotorblech 1 verteilt angeordnet sind. Die ersten und zweiten Ausnehmungen 2, 3 dienen zur Aufnahme von Permanentmagneten 4 und haben hierzu eine schlitzförmige, längliche und gerade Gestalt. Die Längsausdehnungen L1, L2 der ersten bzw. zweiten Ausnehmung sind größer als ihre jeweiligen Querausdehnungen Q1, Q2. Die ersten und zweiten Ausnehmungen 2, 3 sind derart orientiert, dass ihre Längsausdehnungen L1, L2 schräg bezüglich einer radialen Richtung verlaufen, d. h. sie verlaufen bezüglich der radialen Richtung in einem von 0° verschiedenen Winkel. Jeweils zwei, zueinander V-förmig angeordnete erste und zweite Ausnehmungen 2, 3 bilden einen Rotorpol. Sowohl die beiden ersten Ausnehmungen 2 des Rotorpols als auch die beiden zweiten Ausnehmungen des Rotorpols sind bezüglich einer dazwischenliegenden Spiegelachse S spiegelsymmetrisch angeordnet. Die Spiegelachse S verläuft hierbei in der radialen Richtung. Die radial weiter innen liegenden Enden 5, 6 der ersten bzw. zweiten Ausnehmungen 2, 3 des Rotorpols haben einen kleineren Abstand voneinander, als die gegenüberliegenden radial außenliegenden Enden 7, 8.

Die ersten Ausnehmungen 2 sind in einer radial innenliegenden ersten Anordnung in das Rotorblech 1 eingebracht. Die zweiten Ausnehmungen 3 sind bezüglich der ersten Ausnehmungen 2 radial nach außen versetzt, d. h. die Gesamtheit der zweiten Ausnehmungen 3 bilden eine radial außenliegende zweite Anordnung. Sowohl die erste und zweite Anordnung ist in einem kreisringförmigen Radialbereich des Rotorblechs 1 eingebracht. Der kreisringförmige Radialbereich, in dem die zweite Anordnung eingebracht ist, liegt im Wesentlichen vollständig innerhalb des kreisringförmigen Radialbereichs der ersten Anordnung, so dass eine sehr kompakte Struktur für das einzubringende Magnetmaterial vorgegeben ist.

Die beiden ersten und die beiden zweiten Ausnehmungen 2, 3 eines jeden Rotorpols sind zueinander V-förmig angeordnet. Sowohl die ersten beiden Ausnehmungen 2 als auch die beiden zweiten Ausnehmungen 3 eines jeden Rotorpols verlaufen somit zueinander in einem Winkel. Dabei ist der Winkel, in dem die beiden ersten Ausnehmungen 2 zueinander angeordnet sind, kleiner als der Winkel, in dem die beiden zweiten Ausnehmungen zueinander angeordnet sind.

Das Rotorblech 1 weist ferner eine weitere radial innenliegende, umfängliche Anordnung von an regelmäßigen Winkelpositionen angeordneten Aussparungen 9 zur Aufnahme von nicht näher dargestellten Wuchtgewichten auf. Durch Einbringen von Wuchtgewichten in die Aussparungen 9 kann ein von den Rotorblechen 1 gebildeter Rotor ausgewuchtet werden.

Zur Ausbildung eines Rotors 100 für einen Elektromotor wird zunächst in an sich bekannter Art und Weise ein Blechpaket 101 aus einer Vielzahl von Rotorblechen 1 gebildet. Hierzu werden die Rotorbleche 1 derart gestapelt und im Blechpaket 101 fixiert, dass die ersten und zweiten Ausnehmungen 2, 3 durchgängige Magnettaschen zur Aufnahme der Permanentmagnete 4 bilden. Dabei kann das Magnetmaterial der Permanentmagnete 4, die in die von den zweiten Ausnehmungen 3 gebildeten Magnettaschen eingebracht sind, eine geringere Entmagnetisierungsfestigkeit aufweisen, als das Magnetmaterial der Permanentmagnete 4 in den ersten Ausnehmungen 2.

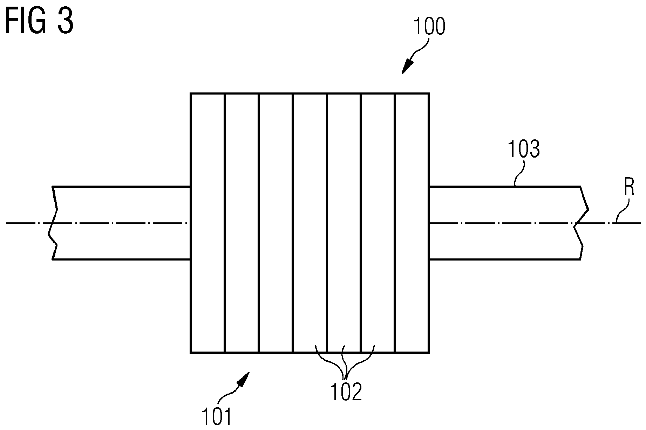

Figur 3 zeigt eine Ausführungsform, die einen sogenannten gestaffelten Rotor 100 betrifft, dessen Blechpaket 101 aus einer Vielzahl von Einzelpaketen 102, beispielsweise 5 bis 7 Einzelpakete, gebildet ist, die jeweils durchgängige Magnettaschen für die Permanentmagnete 4 aufweisen. Die Einzelpakete 102 sind zueinander um einen Winkelversatz versetzt auf einer Rotorwelle 103 fixiert, d. h. die Einzelpakete 102 sind zueinander um einen kleinen Winkel um eine Rotorachse R verdreht angeordnet. Der Winkelversatz entspricht hierbei bevorzugt dem Quotienten aus 360° und dem Produkt der Anzahl der Statornuten eines Stators und der Anzahl der Teilpakete des Rotors 100. In einem Ausführungsbeispiel weist der zu einem achtpoligen Rotor 100 korrespondierende Stator 48 Statornuten zur Aufnahme von Statorwicklungen auf. Entsprechend sind die 7 Einzelpakete 102 dieser exemplarischen Ausführung jeweils um etwa 1,07° zueinander versetzt angeordnet.

Zur Anzeige des Winkelversatzes der Einzelpakete 101 zueinander sind in den Rotorblechen 1 weitere Bohrungen 10 vorgesehen, die sich an unregelmäßigen Winkelpositionen befinden.

Obwohl die Erfindung im Detail mit Bezug auf das bevorzugte Ausführungsbeispiel näher illustriert und beschrieben wurde, so ist die Erfindung nicht hierdurch eingeschränkt. Andere Variationen und Kombinationen können vom Fachmann hieraus abgeleitet werden, ohne vom wesentlichen Gedanken der Erfindung abzuweichen.

## Patentansprüche

1. Rotorblech (1) für einen permanenterregten Elektromotor, mit mehreren in umfänglichen Anordnungen in das Rotorblech (1) eingebrachten, länglichen ersten und zweiten Ausnehmungen (2, 3) zur Aufnahme von Permanentmagneten (4), wobei die ersten Ausnehmungen (2) in einer radial innenliegenden ersten Anordnung und die zweiten Ausnehmungen (3) in einer radial außenliegenden zweiten Anordnung derart orientiert sind, dass jede erste und zweite Ausnehmung (2, 3) schräg bezüglich einer radialen Richtung verläuft, wobei zur Ausbildung eines Rotorpols jeweils zwei in Umfangsrichtung benachbart und zueinander V-förmig angeordnete erste und zweite Ausnehmungen (2, 3) vorgesehen sind, die spiegelsymmetrisch bezüglich einer dazwischenliegenden und in radialer Richtung verlaufenden Spiegelachse (S) angeordnet sind.

2. Rotorblech (1) nach Anspruch 1,
wobei die beiden ersten und zweiten Ausnehmungen (2, 3) eines jeden Rotorpols zueinander in Winkeln angeordnet sind, wobei der Winkel zwischen den ersten Ausnehmungen (2) größer ist als der Winkel zwischen den zweiten Ausnehmungen (3).

3. Rotorblech (1) nach einem der Ansprüche 1 oder 2,
wobei radial innenliegende Enden (5, 6) der ersten und zweiten Ausnehmungen (2, 3) eines jeden Rotorpols zueinander in Umfangsrichtung in einem kleineren Abstand angeordnet sind, als radial außenliegende Enden (7, 8) der ersten und zweiten Ausnehmungen (2,3).

4. Rotorblech (1) nach einem der vorhergehenden Ansprüche,
wobei die Längsausdehnung (L1) der ersten Ausnehmungen (2) größer ist als die Längsausdehnung (L2) der zweiten Ausnehmungen (3).

5. Rotorblech (1) nach einen der vorhergehenden Ansprüche,
wobei die erste Anordnung und zweite Anordnung in zumindest abschnittsweise überlappenden kreisringförmigen Radialbereichen des Rotorblechs (1) eingebracht sind.

6. Rotorblech (1) nach einen der vorhergehenden Ansprüche,
wobei mehrere Aussparungen (9) zur Aufnahme von Wuchtgewichten zueinander in regelmäßigen Abständen in einer umfänglichen Anordnung in das Rotorblech (1) eingebracht sind.

7. Rotor (100) für einen permanenterregten Elektromotor, mit mehreren entlang einer Rotorachse (R) nebeneinander in einem Blechpaket (101) fixierten Rotorblechen (1) nach einem der vorhergehenden Ansprüche.

8. Rotor (100) nach Anspruch 7,
wobei das Blechpaket (101) aus mehreren Einzelpaketen (102) besteht, in denen jeweils mehrere Rotorbleche (1) derart angeordnet sind, dass die ersten und zweiten Ausnehmungen (2, 3) übereinander liegen und zumindest zwei benachbarte Einzelpakete (101) zueinander um einen Winkelversatz um die Rotorachse (R) versetzt angeordnet sind.

9. Rotor (100) nach Anspruch 8,
wobei der Winkelversatz 360° geteilt durch das Produkt aus der Anzahl von Statornuten und der Anzahl der Einzelpakete (101) beträgt.

10. Rotor (100) nach einem der Ansprüche 7 bis 9,
wobei der Rotor (100) mehrere Rotorpole umfasst, die jeweils von Permanentmagneten (4) gebildet sind, die in die jeweils zwei in Umfangsrichtung benachbart und zueinander V-förmig angeordneten ersten und zweiten Ausnehmungen (2, 3) der Rotorbleche (1) eingebettet sind, wobei die in den zweiten Ausnehmungen (3) eingebetteten Permanentmagnete (4) aus einem Magnetmaterial bestehen, welches eine geringere Entmagnetisierungsfestigkeit aufweist, als Magnetmaterial der in den ersten Ausnehmungen (1) eingebetteten Permanentmagnete (4).
